# EUROPEAN PATENT SPECIFICATION

(11) **EP 2 232 924 B1**
(45) Date of publication and mention of the grant of the patent: **30.05.2018**
(21) Application number: 08862908.4
(22) Date of filing: 17.12.2008
(51) Int. Cl.: H04W 48/16, H04W 36/32

(54) **METHOD AND APPARATUSES FOR ESTABLISHING A WIRELESS NETWORK SIGNAL ACQUISITION RATE**
VERFAHREN UND VORRICHTUNGEN ZUM FESTLEGEN EINER SIGNALAKQUISITIONSRATE EINES DRAHTLOSEN NETZES
PROCÉDÉ ET DISPOSITIFS POUR ÉTABLIR UN DÉBIT D'ACQUISITION DE SIGNAL DE RÉSEAU SANS FIL

(30) Priority: 17.12.2007 US 958257
(43) Date of publication of application: 29.09.2010
(73) Proprietor: QUALCOMM Incorporated, San Diego, CA 92121 (US)
(72) Inventor: ROWITCH, Douglas Neal, San Diego California 92121 (US)
(74) Representative: Howe, Steven
(86) International application number: PCT/US2008/087252
(87) International publication number: WO 2009/079594

(56) References cited:
- EP-A1- 1 328 087
- GB-A- 2 305 825
- US-A1- 2006 119 508

## Description

### BACKGROUND

### 1. Field

The subject matter disclosed herein relates to wireless communication systems, and more particularly to wireless network signal acquisition methods and apparatuses for use with or by a portable wireless device.

### 2. Information

Portable wireless devices continue to gain in popularity. Of course, to reach their full potential such portable wireless devices should be connected to one or more wireless communication systems or networks. As such, when a portable wireless device is powered-on it will typically attempt to connect to a wireless network by first acquiring a wireless signal transmitted by one or more resources within the wireless network. The portable wireless device may continue to attempt to acquire a wireless network signal until it succeeds.

Unfortunately, often there are times when a wireless network connection simply cannot be made. As such, some portable wireless devices may be configurable to limit the number of acquisition attempts or perhaps the amount of time spent conducting such acquisition attempts. Some portable wireless devices may be configurable to either reduce over-time the number of prove unsuccessful. Such a reduction in the acquisition rate, for example, tends to help reduce power consumption and therefore may prolong battery life. Indeed, some portable wireless devices may eventually enter into a suspended or sleep mode during which attempts are not made.
US 2006/119508 discloses a mobile device that uses motion awareness to help conserve power. The scanning rate for one or more receivers can be controlled based on a velocity vector that is determined from the determined motion, with scanning being stopped when the device is determined to be stationary.
GB 2305825 discloses a mobile device that uses GPS data to determine motion, with the time between successive monitoring of radio channels being dependent upon the determined motion.
EP 1328087 discloses a communication method having a variable time interval between the measurement of channel characteristics, in which the variable time is dependent upon the mobility of a wireless terminal.

The invention is carried out according to independent method claim 1, as well as to the corresponding independent apparatus claims 10 and 11.

### BRIEF DESCRIPTION OF DRAWINGS

Non-limiting and non-exhaustive aspects are described with reference to the following figures, wherein like reference numerals refer to like parts throughout the various figures unless otherwise specified.
Fig. 1 is a block diagram illustrating an exemplary system having a portable wireless device adaptable to establish or otherwise respond to a wireless network signal acquisition rate based, at least in part, on movement information associated with the portable wireless device in accordance with one aspect.
Fig. 2A is a block diagram illustrating certain aspects of an exemplary portable wireless device, such as, for example, as in Fig.1.
Fig. 2B is a block diagram illustrating certain aspects of an exemplary arrangement for use with a portable wireless device, such as, for example, as in Fig.1.
Fig. 3 presents timeline diagrams illustrating certain aspects of an exemplary portable wireless device, such as, for example, as in Figs. 2A-B.
Fig. 4 presents graph diagrams illustrating certain aspects of an exemplary portable wireless device, such as, for example, as in Figs. 2A-B.
Fig. 5 is a flow diagram illustrating certain aspects of an exemplary method for use in a portable wireless device, such as, for example, as in Fig. 2A-B.

### DETAILED DESCRIPTION

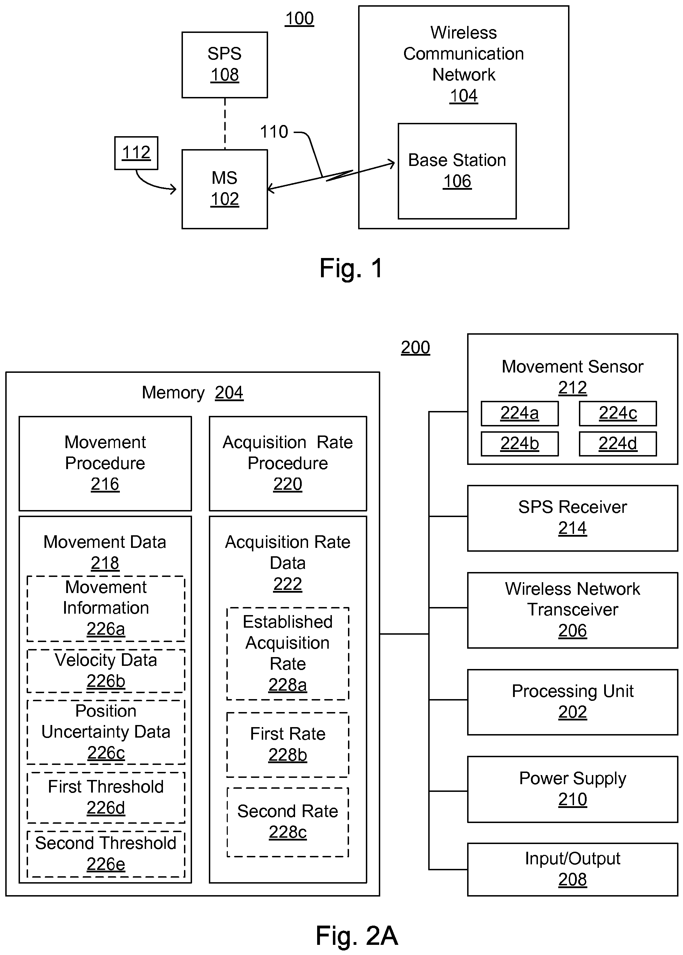

Fig. 1 is a block diagram illustrating an exemplary system 100 that includes a mobile station (MS) 102 configurable to communicate with at least one wireless communication network 104. As shown, wireless network 104 may, for example, include one or more base stations 106 or other like devices capable of communicating with MS 102 through a wireless signal 110. As shown in this example, MS 102 and/or an arrangement (not shown) operatively coupled to MS 102 may also be configurable to receive signals from a satellite positioning system (SPS) 108. MS 102 and/or an arrangement (not shown) operatively coupled to MS 102 may, for example, be configurable to include, receive, or otherwise access a computer readable medium 112.

As used herein, a portable wireless device refers to any portable or movable device or machine that is configurable to acquire wireless signals transmitted from, and transmit wireless signals to, one or more wireless communication devices or networks. In Fig. 1, MS 102 is representative of such a portable wireless device. Thus, by way of example but not limitation, MS 102 may include a radio device, a cellular telephone device, a computing device, a personal communication system (PCS) device, or other like movable wireless communication equipped device, appliance, or machine.

The term "acquire" as used herein with regard to a wireless signal and a portable wireless device, refers to the portable wireless device having obtained sufficient information from a wireless signal to enable processing of the received wireless signal to obtain data transmitted therein. Such information may include, for example, information relating to a carrier frequency, an RF phase, a code, a code-phase, timing, and/or Doppler shift, just to name a few examples. Upon successfully acquiring a wireless signal from a wireless communication network, a portable wireless device may communicate further with the wireless communication network. The actual wireless signal acquisition technique that may be implemented by the portable wireless device will depend on the wireless signaling scheme associated with the wireless communication network. Such wireless signal acquisition techniques are well known and beyond the scope of the present description.

As described in greater detail below, the various aspects of the methods and apparatuses presented herein are not limited to any particular wireless signal acquisition technique or communication scheme. Indeed, since in accordance with certain aspects the methods and apparatuses presented herein are directed towards controlling the timing and/or initiation of one or more attempts to acquire a wireless signal, the actual techniques associated with such acquisition attempt(s) may simply be immaterial.

As used herein, a wireless communication network refers to one or more devices configurable to transmit wireless signals to and receive wireless signals from a portable wireless device. In Fig. 1, wireless communication network 104 and base station 106, individually or combined, are representative of such a wireless communication network. Thus, by way of example but not limitation, wireless communication network 104 and base station 106, individually or combined, may include a wireless wide area network (WWAN), a wireless local area network (WLAN), a wireless personal area network (WPAN), and so on.

The term "network" and "system" are often used interchangeably. A WWAN may, for example, be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, and so on. A CDMA network may, for example, implement one or more radio access technologies (RATs) such as cdma2000, Wideband-CDMA (W-CDMA), and so on. Cdma2000 includes IS-95, IS-2000, and IS-856 standards. A TDMA network may, for example, implement Global System for Mobile Communications (GSM), Digital Advanced Mobile Phone System (DAMPS), or some other RAT. GSM and W-CDMA are described in documents from a consortium named "3rd Generation Partnership Project" (3GPP). Cdma2000 is described in documents from a consortium named "3rd Generation Partnership Project 2" (3GPP2). 3GPP and 3GPP2 documents are publicly available. A WLAN may, for example, be an IEEE 802.11x network, and a WPAN may be a Bluetooth network, an IEEE 802.15x, or some other type of network. The techniques may also be used for any combination of WWAN, WLAN and/or WPAN.

As used herein, a satellite positioning system (SPS) refers to one or more devices configurable to transmit wireless signals to a portable wireless device (and/or an arrangement that may be operatively coupled to a portable wireless device) wherein the wireless signals allow the portable wireless device to determine its positional status in some manner. In Fig. 1, SPS 108 is representative of such a satellite positioning system. Thus, by way of example but not limitation, SPS 108 may include the Global Positioning System (GPS), Galileo, GLONASS, NAVSTAR, Beidou, QZNSS, a system that uses satellites from a combination of these systems, or any SPS developed in the future.

Furthermore, as used herein, SPS 108 may also include a "pseudolite" system. A pseudolite system may, for example, include ground-based transmitters that broadcast a PN code or other ranging code (similar to a GPS or CDMA cellular signal) modulated on an L-band (or other frequency) carrier signal, which may be synchronized with GPS time. Each such transmitter may, for example, be assigned a unique PN code so as to permit identification by a remote receiver such as MS 102. Such a pseudolite system may be useful in situations where GPS signals from an orbiting satellite might be unavailable, such as in tunnels, mines, buildings, urban canyons or other enclosed areas.

The methodologies described herein may be implemented by various means depending upon the application. For example, these methodologies may be implemented in hardware, firmware, software, or a combination thereof. For a hardware implementation, one or more processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For a firmware and/or software implementation, the methodologies may, for example, be implemented with modules (e.g., procedures, functions, and so on) that perform the functions described herein. Any machine or computer readable medium tangibly embodying instructions may be used in implementing the methodologies described herein. For example, software codes or instructions and other data may be stored in a memory, for example the memory of mobile station, and executed by one or more processing units. Memory may be implemented within the processor or external to the processor. As used herein the term "memory" refers to any type of long term, short term, volatile, nonvolatile, or other memory and is not to be limited to any particular type of memory or number of memories, or type of media upon which memory is stored.

As illustrated in Fig.1, a computer-readable medium 112 carrying instructions and/or data may be operatively coupled to MS 102 and/or an arrangement (not shown) operatively coupled to MS 102. By way of example, certain procedures or functions may be implemented as one or more instructions or code on computer-readable medium 112. Thus, computer-readable media may include computer storage media and/or communication media including any medium that facilitates transfer of a computer program from one place to another. A storage media may be any available media that can be accessed by a computer. By way of example but not limitation, such computer-readable media may include RAM, ROM, EEPROM, CD-ROM or other optical disk storage, magnetic disk storage or other magnetic storage devices, or any other medium that can be used to carry or store desired program code in the form of instructions or data structures and that can be accessed by MS 102. Also, any connection may be properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above are also within the scope of computer-readable medium 112.

In the example of Fig. 1, base station 106 is shown as being within wireless communication network 104. It should be understood that wireless communication network 104 may include additional base stations or other resources, including MS 102 in certain implementations. While base station 106 may actually be moveable or otherwise capable of being relocated, for illustration purposes it will be assumed that base station 106 is essentially arranged in a fixed position.

To the contrary, the position of MS 102, for example, with respect to base station 106 may change as it is moved about. It is therefore possible that, at times, MS 102 will be in a position where for some reason signal 110 from base station 106 may not be acquired by MS 102. For example, MS 102 may move out of the coverage area of base station 106, or MS 102 may be located in a position wherein signal 110 is blocked or otherwise interfered with in some manner. Consequently, there will be times when MS 102 needs to acquire or re-acquire signal 110. Depending on the situation, MS 102 may perform a plurality of signal acquisition attempts before it successfully acquires signal 110.

In accordance with certain aspects of the exemplary methods and apparatuses presented herein, MS 102 may be configurable to selectively initiate or otherwise adaptively control how often an acquisition attempt should be made based, at least in part, on detected or otherwise determined movement of MS 102. Thus, for example, as described in more detail below, MS 102 may be configurable to determine changes in its positional status or lack thereof based, at least in part, on movement information, and in response establish or otherwise set a wireless network signal acquisition rate that specifies when or how often MS 102 should attempt to acquire wireless signal 110.

Reference is now made to Fig. 2A, which is a block diagram illustrating certain features and/or functions that may be included in a portable wireless device 200. Portable wireless device 200 may, for example, be included in MS 102.

In this example, portable wireless device 200 may include a processing unit 202, a memory 204, a wireless network transceiver 206, an input/output 208, a power supply 210, a movement sensor 212, and a SPS receiver 214.

As illustrated here, within memory 204, portable wireless device 200 may include or otherwise provide a movement procedure 216 and an acquisition rate procedure 220. As illustrated here, within memory 204, portable wireless device 200 may include movement data 218 and acquisition rate data 222. In certain implementations, movement data 218 may, for example, include movement information 226a, velocity data 226b, position uncertainty data 226c, first threshold 226d, second threshold 226e, or the like. In certain implementations, acquisition rate data 222 may, for example, include an established acquisition rate 228a, a first rate 228b, a second rate 228c, or the like. Further, as illustrated here, within movement sensor 212, portable wireless device 200 may include an accelerometer 224a, a gyroscope 224b, a geomagnetic sensor 224c (e.g., a compass), an altimeter 224d (e.g., a barometric pressure altimeter), or other type of movement detection sensor.

While movement procedure 216 and acquisition rate procedure 220 are illustrated in the example as being in memory 204, it is recognized that in certain implementations such procedures may be provided for or otherwise operatively arranged using other or additional mechanisms. For example, all or part of movement procedure 216 or acquisition rate procedure 220 may be provided in firmware. Additionally, while in this example movement procedure 216 and acquisition rate procedure 220 are illustrated as being separate features, it is recognized, for example, that such procedures may be combined together as one procedure or perhaps with other procedures, or otherwise further divided into a plurality of procedures.

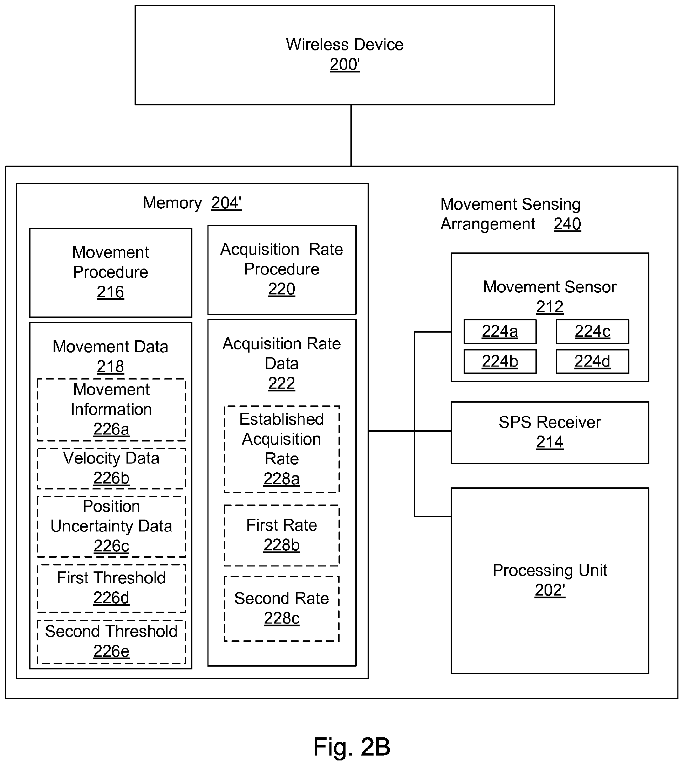

For the sake of simplicity, the various features and functions illustrated in the box diagram of Fig. 2A are connected together using a common bus which is meant to represent that these various features and functions are operatively coupled together. Those skilled in the art will recognize that other connections, mechanisms, features, functions, or the like, may be provided and adapted as necessary to operatively couple and configure an actual portable wireless device. Further, it is also recognized that one or more of the features or functions illustrated in the example of Fig. 2A may be further subdivided or two or more of the features or functions illustrated in Fig. 2A may be combined. Further, in certain implementations some or all of the movement sensing features and/or functions may be provided in a separate arrangement that may be operatively coupled to a portable wireless device and configurable to initiate or otherwise control the timing of wireless network signal acquisition attempts by the portable wireless device, for example, as illustrated in Fig. 2B.

With regard to Fig. 2A, power supply 210 may be configurable to supply electrical power to all or portions of the circuitry associated with portable wireless device 200. By way of example, power supply 210 may include one or more batteries or the like. Power supply 210 may include an interface for receiving electrical power from an external device. Such power supply arrangements are well known.

Processing unit 202 may include any form of logic suitable for performing at least the techniques provided herein. For example, processing unit 202 may be operatively configurable based on instructions in memory 204 to selectively initiate one or more attempts to acquire a wireless signal via wireless network transceiver 206. Wireless network transceiver 206 may, for example, be configurable to operatively couple portable wireless device 200 to at least on wireless communication network by acquiring such a wireless signal. Wireless network transceiver 206 may, for example, include communication circuitry operatively coupled to an antenna (not shown). Wireless network transceiver 206 may be configurable to perform or otherwise support a wireless signal acquisition process the timing of which may be established by or otherwise controlled by processing unit 202 based at least in part on movement data 218.

In certain implementations, a wireless signal acquisition attempt may be defined by the wireless communication scheme or protocol implemented by the wireless communication network. In one particular example, a wireless signal acquisition attempt may have a start point and an end point. Thus, for example, a wireless signal acquisition attempt may be defined by a sequence of actions that once initiated (started) continues until an end point is reached. In certain implementations, for example, the start point and/or end point may be selectively controlled by processing unit 202. In certain implementations, for example, an end point may be determined by either a successful acquisition or by a failure to acquire the wireless signal within a specified period of time; in some implementations, for example, the end point may be determined by a characteristic or action that is not related to time but is reached nonetheless.

Processing unit 202 may, for example, be configurable by acquisition procedure 220 to selectively initiate or otherwise selectively cause the initiation of one or more wireless signal acquisition attempts by wireless network transceiver 206 based, at least in part, on acquisition rate data 222. Processing unit 202 may, for example, be configurable by acquisition procedure 220 to access acquisition rate data 222, Processing unit 202 may, for example, be configurable by acquisition procedure 220 to establish acquisition rate data 222.

Processing unit 202 may, for example, be configurable to access movement data 218 and based at least in part thereon dynamically or from time to time adjust or otherwise establish acquisition rate data 222. By way of example but not limitation, acquisition rate data 222 may include an established acquisition rate 228a that may be updated as movement of portable wireless device 200 is detected or otherwise determined. Established acquisition rate 228a may, for example, define a wait time that specifies when the next wireless signal acquisition attempt should be initiated, a periodicity that specifies how often to initiate wireless signal acquisition attempts, a formula or schedule that can be used to determine when to initiate one or more wireless signal acquisition attempts.

As described in greater detail below, acquisition rate data 222 may also specify or otherwise provide one or more specific acquisition rates that may be applied under certain conditions to specify or otherwise determine when to initiate one or more wireless signal acquisition attempts. By way of example but not limitation, first rate 228b and second rate 228c may be provided to specify desired states to be applied when portable wireless device 200 is determined to be moving either "too slow" or "too fast". Here, for example, first rate 228b may be selected by acquisition rate procedure 220 when the determined movement of portable wireless device 200 is deemed too slow in that it is below first threshold 226d. Likewise, for example, second rate 228c may be selected by acquisition rate procedure 220 when the determined movement of portable wireless device 200 is deemed too fast in that it is above second threshold 226d.

In certain implementations, portable wireless device 200 may, for example, be configurable to support of plurality of rates that may be selected or otherwise implemented based, at least in part, on a plurality of thresholds.

All or part of acquisition rate data 222 may be determined by processing unit 202, for example, in accordance with acquisition rate procedure 220. In certain implementations, all or part of acquisition rate data 222 may be predetermined or otherwise determined by one more other devices and provided to processing unit 202, e.g., though wireless network transceiver 206 or input/output 208 for storage in memory 204.

Likewise, all or part of movement data 218 may be determined by processing unit 202, for example, in accordance with movement procedure 216. In certain implementations, all or part of movement data 218 may be predetermined or otherwise determined by one more other devices and provided to processing unit 202, e.g., though wireless network transceiver 206 or input/output 208 for storage in memory 204. In certain implementations, all or part of movement data 218 may also be provided by way of movement sensor 212 or SPS receiver 214.

In certain implementations, input/output 208 may include one or more human input or output devices, a data port, a computer-readable media reader/adapter or port, or the like which allow for data or instructions to be provided to portable wireless device 200.

Processing unit 202 in accordance with movement procedure 216 may be configurable to receive or otherwise access movement information output by movement sensor 212. In certain implementations, such movement information may include digital movement information 226a, shown in the example of Fig, 2 as being stored in memory 204. Movement information 226a may, for example, be provided to memory 204 from movement sensor 212. Movement information 226a may, for example, be provided to memory 204 by processing unit 202 which may be configurable to receive corresponding movement information from movement sensor 212 and output movement information 226a. For example, it is recognized that in certain implementations, processing unit 202 may need to convert or otherwise process the movement information output by movement sensor 212 to produce movement information 226a.

Processing unit 202 in accordance with movement procedure 216 may be configurable to receive or otherwise access movement information output by SPS receiver 214. In certain implementations, such movement information may include digital movement information 226a, shown in the example of Fig, 2 as being stored in memory 204. Movement information 226a may, for example, be provided to memory 204 from SPS receiver 214. Movement information 226a may, for example, be provided to memory 204 by processing unit 202 which may be configurable to receive corresponding movement information from SPS receiver 214 and output movement information 226a. For example, it is recognized that in certain implementations, processing unit 202 may need to convert or otherwise process the movement information output by SPS receiver 214 to produce movement information 226a.

Movement information 226a may, for example, include movement data sensed or otherwise gathered over time. As such, processing unit 202 in accordance with movement procedure 216 may be configurable to access movement information 226a and based at least in part thereon establish velocity data 226b, position uncertainty data 226c, or other like data. Velocity data 226b may, for example, represent a velocity or estimated velocity of portable wireless device 200. Position uncertainty data 226c may, for example, represent a potential sensed change in position of the portable wireless device, e.g., based on a sensor reading, and/or one or more sensor readings accumulated at different times or over a period of time, etc.

Techniques for identifying, determining or otherwise estimating velocity and/or position uncertainty are well known and many are believed adaptable for use in portable wireless device 200.

By way of example but not limitation, if movement sensor 212 includes accelerometer 224a, gyroscope 224b, or the like, which may output movement information associated with detected acceleration of portable wireless device 200, then movement procedure 216 may configure processing unit 202 to integrate or otherwise process such movement information to establish at least an estimated corresponding velocity. In certain implementations, movement procedure 216 may configure processing unit 202 to process such movement information to establish an accumulated position uncertainty, or the like.

By way of additional example but not limitation, if movement sensor 212 includes geomagnetic sensor 224c, altimeter 224d, or the like, which may output movement information associated with detected differences in the environment over time, then movement procedure 216 may configure processing unit 202 to interpret or otherwise process such movement information as needed to establish at least movement data 218, such as, e.g., an estimated corresponding velocity, an accumulated position uncertainty, or the like. For example, changes in compass readings over a period of time may be indicative of positional changes relating to movement based on which movement data 218 may be established. For example, changes in altitude readings may be indicative of positional changes relating to movement based on which movement data 218 may be established.

Reference is now made to Fig. 2B, which is a block diagram illustrating that certain features and/or functions shown in Fig. 2A as being included in a portable wireless device may instead be arranged in a modular manner, for example, in a movement sensing arrangement 240 that may be operatively coupled a portable wireless device 200'. By way of example but no limitation, portable wireless device 200' may include a requisite wireless network transceiver 206 and related communication features and functions (e.g., as shown in Fig. 2A), while all or some of the features and functions associated with movement detection and/or acquisition rate determination are provided in a movement sensing arrangement 240. In the example illustrated in Fig. 2B, the combination of movement sensing arrangement 240 and portable wireless device 200', may, for example, operate in similar fashion to portable wireless device 200.

Portable wireless device 200 may, for example, be configurable to receive acquisition rate data provided by movement sensing arrangement 240 and/or otherwise initiate wireless network signal acquisition process in response to one or more signals received from movement sensing arrangement 240.

As shown in Fig. 2B, movement sensing arrangement 240 may include a memory 204', processing unit 202', and at least one of movement sensor 212 or SPS receiver 214, each of which may, for example, be configurable to operate, at least in part, in similar fashion as described above with regard to Fig. 2A. In certain implementations, movement sensing arrangement 240 may, for example, provide acquisition rate data 222 or other data in memory 204' to portable wireless device 200'. In other implementations, movement sensing arrangement 240 may, for example, provide one or more signals to portable wireless device 200' that lead portable wireless device to initiate a wireless network signal acquisition process. For example, processing unit 202' may be configurable under movement procedure 216 and/or acquisition rate procedure 220 to send an interrupt or other like signal(s) to wireless device 200' when portable wireless device is to initiate a wireless network signal acquisition process. Thus, for example, movement sensing arrangement 240 may be configurable to make acquisition attempt decisions for a portable wireless device based, at least in part, on detecting movement. When implemented in a modular form movement sensing arrangement 240 may, for example, be removeably coupled to a portable wireless device or incorporated within a portable wireless device.

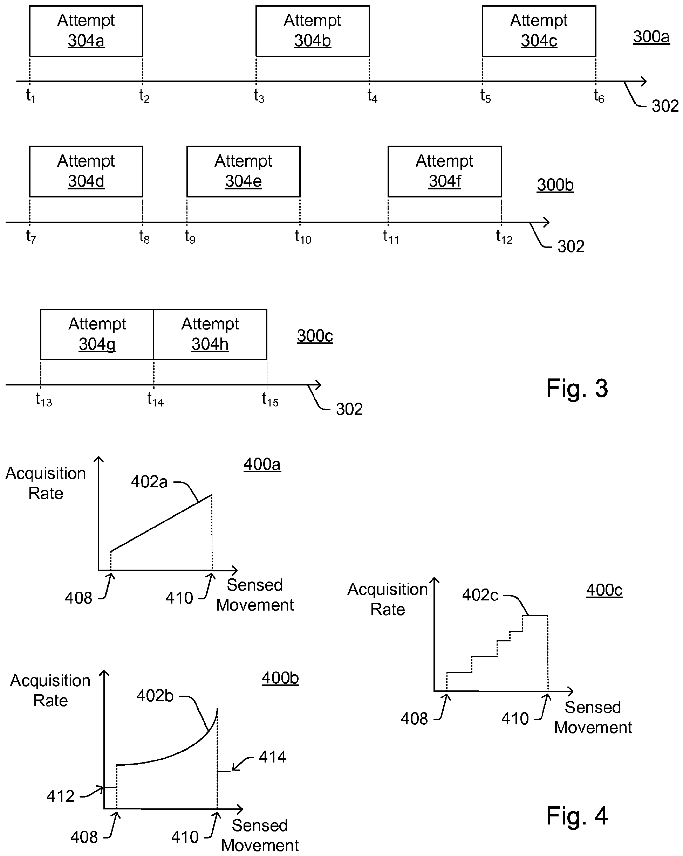

Reference is now made to Fig. 3, which illustrates certain exemplary wireless network signal acquisition processes 300a-c that may be initiated, for example, by portable wireless device 200 of Fig. 2A. Processes 300a-c show that various wireless network signal acquisition attempts 304a-h initiated at different times along timeline 302. Each of the wireless network signal acquisition attempts 304a-h is, unfortunately, unsuccessful in acquiring a wireless network signal. While attempts 304a-h are each illustrated as having substantially the same duration, it should be understood that one or more attempts may have different durations.

Process 300a shows that three wireless network signal acquisition attempts 304a-c are initiated at different times along timeline 302 based, at least in part, on acquisition rate data 220 that defines or otherwise leads to a substantially periodic rate. Here, for example, attempt 304a starts at time t₁ and ends at time t₂; attempt 304b starts at time t₃ and ends at time t₄; and, attempt 304c starts at time t₅ and ends at time t₆. In this example, the time between attempts may be considered a wait time. Thus, for example, there is a wait time between the end of attempt 304a at time t₂ and the start of attempt 304b at time t₃. Acquisition rate data time 220 may, for example, define a periodicity rate associated with the start time, end time, and/or duration of one or more attempts. Acquisition rate data time 220 may, for example, define a periodicity rate associated with the start time, end time, and/or duration of one or more wait times between subsequent attempts.

Process 300b shows that three wireless network signal acquisition attempts 304d-f are initiated at different times along timeline 302 based, at least in part, on acquisition rate data 220 that defines or otherwise leads to a variable rate. Here, for example, attempt 304d starts at time t₇ and ends at time t₈; attempt 304e starts at time t₉ and ends at time t₁₀; and, attempt 304f starts at time t₁₁ and ends at time t₁₂. In process 300b, unlike process 300a, start times are not substantially evenly distributed along timeline 302. Thus, for example, as can be seen the resulting wait time between attempts 304d and 304e has a duration that is less than the resulting wait time between attempts 304e and 304f. Here, for example, acquisition rate data 220 may have been decreased based, at least in part, on a decrease in the sensed movement of portable wireless device 200.

Process 300c shows that two wireless network signal acquisition attempts 304g and 304h are initiated at different times along timeline 302 based, at least in part, on acquisition rate data 220 that defines or otherwise leads to a substantially continuous rate. Here, for example, attempt 304g starts at time t₁₃ and ends at time t₁₄ and attempt 304e starts at time t₁₄ and ends at time t₁₅. In process 300c, unlike processes 300a-b, there is substantially no wait time between attempts 304g and 304h. Here, for example, acquisition rate data 220 may have been maximized based, at least in part, on the movement of portable wireless device 200 indicative of a strong likelihood of signal acquisition.

Conversely, while not shown in Fig. 3, it should understood that acquisition rate data 220 may, for example, be minimized for a period of time based, at least in part, on the movement or lack of movement of portable wireless device 200 indicative of a less than strong likelihood of signal acquisition. Thus, for example, if one or more attempts have failed and portable wireless device 200 is deemed to be stationary or moving too slow, then a wait time may extended indefinitely or other actions taken to postpone or delay the next attempt. For example, in certain implementations portable wireless device 200 may be placed in a reduced operating state, such as, e.g., a sleep state, based the sensed movement of portable wireless device 200. As previously mentioned and shown in greater detail below, one or more thresholds may be used to further define the acquisition rate data based, at least in part, on the sensed movement of portable wireless device 200.

Reference is now made to Fig. 4, which includes three graphs 400a-c depicting different exemplary techniques that may, for example, be implemented in acquisition rate procedure 220 to determine an acquisition rate based, at least in part, on the sensed movement of portable wireless device 200, and more particularly, to establish established acquisition rate data 228a, and select between established acquisition rate data 228a, first rate 228b, and/or second rate 228c (see Fig. 2A).

Graph 400a illustrates that as the sensed movement (see, x-axis) of portable wireless device 200 increases, the acquisition rate (see, y-axis) may proportionally increase based, at least in part, on a linear function represented by line 402a. Thus, in graph 400a, the acquisition rate linearly increases and decreases based, at least in part, on increases and decreases, respectively, in sensed movement between a first threshold 408 and a second threshold 410. As shown, in this example, line 402a has a positive slope. When the sensed movement is below first threshold 408 then the acquisition rate may, for example, be minimized and/or set to first rate 228b. When the sensed movement is above second threshold 410 then the acquisition rate may, for example, be maximized and/or set to second rate 228c. Here, for example, both the first and second rates are on the x-axis.

While in the graphs of Fig, 4, first threshold 408 is illustrated as being positive with respect to the x-axis, it should be understood that in certain implementations the first threshold may be located at the origin. Also, it is noted that in certain implementations there may be no thresholds at all or there may be additional thresholds.

Graph 400b, which is similar to graph 400a, illustrates that as the sensed movement of portable wireless device 200 increases the acquisition rate may proportionally increase based, at least in part, on a non-linear function represented by curved line 402b. Thus, in graph 400b, the acquisition rate increases and decreases in a non-linear manner based, at least in part, on increases and decreases, respectively, in the sensed movement between first threshold 408 and second threshold 410. As shown, in this example, curved line 402b has a continuously positive slope. It is recognized that other curves or functions may be implemented and that some may even introduce flat portions and/or negative slopes. In this example, when the sensed movement is below first threshold 408 then the acquisition rate may, for example, be minimized or set to first rate 228b. When the sensed movement is above second threshold 410 then the acquisition rate may, for example, be maximized or set to second rate 228c. Here, for example, first rate 228b is set to acquisition rate 412 above the x-axis and second rate 228b is set to acquisition rate 414 further above the x-axis.

Graph 400c, which is similar to graph 400a, illustrates that as the sensed movement of portable wireless device 200 increases, the acquisition rate may proportionally increase based, at least in part, on a discrete function represented by stepped line 402c. Thus, in graph 400c, the acquisition rate increases and decreases in a discrete manner based, at least in part, on increases and decreases, respectively, in the sensed movement between first threshold 408 and second threshold 410. As shown, in this example, stepped line 402c presents a positive stepping slope. It is recognized that other discrete functions may be implemented and that some may even introduce negative stepping slopes. In this example, when the sensed movement is below first threshold 408 then the acquisition rate may, for example, be minimized and/or set to first rate 228b. When the sensed movement is above second threshold 410 then the acquisition rate may, for example, be maximized and/or set to second rate 228c. Here, for example, both the first and second rates are on the x-axis.

The sensed movement values illustrated as increasing along the x-axis in the graphs Fig. 4 may, for example, include or otherwise be based, at least in part, on one or more sensed movements of the portable wireless device, e.g., as stored in movement data 218. By way of example but not limitation, such sensed movement values may include measured and/or estimated positional changes related to the type of movement sensor(s) available. Thus, for example, the sensed movement value may include or otherwise be determined from one or more measurements taken at different times which lead to a velocity, a position uncertainty, and/or the identification of changes in acceleration, directional position, altitude, or the like. In certain implementations, for example, the sensed movement values may include or otherwise be based, at least in part, on an accumulated position uncertainty measurement that averages sensed movement measurements over time.

It is further recognized that in certain implementations acquisition rate procedure 220 may implement a combination of linear, non-linear, or discrete functions.

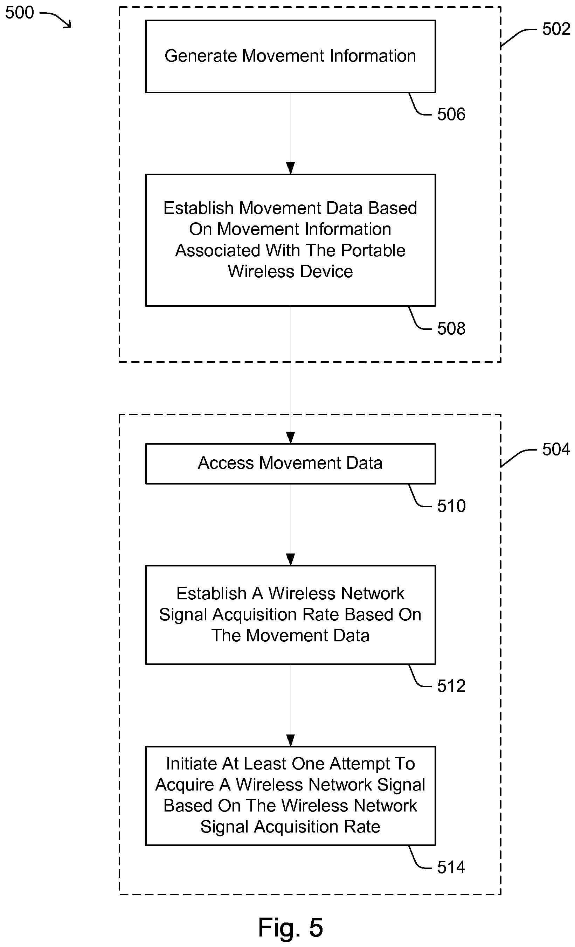

Reference is now made to Fig. 5, which is a flow diagram illustrating a process 500 for use in a portable wireless device. Process 500 includes section 502 that may, for example, be associated with a movement procedure, and section 504 that may, for example, be associated with an acquisition rate procedure.

In 506, movement information may be generated. The movement information may be associated with the sensed positional status of the portable wireless device. For example, the movement information may be generated by one or more movement sensors, such as, an accelerometer, a gyroscope, a geomagnetic sensor, an altimeter, or the like, within or otherwise coupled to the portable wireless device. For example, the movement information may be generated by one or more SPS receivers within the portable wireless device based, at least in part, on received SPS signals.

In 508, movement data is established based, at least in part, on the movement information generated in 506. In 508, for example, at least a portion of the movement information may be converted or otherwise processed, as applicable, and the resulting movement data provided for storage in memory. Such movement data may include, for example, velocity data, position uncertainty data, or the like. In 508, for example, additional movement data may include one or more thresholds that may be determined or otherwise inputted or accessed and provided for storage in memory.

Per section 502, all or part of the actions in 506 and/or 508 may be repeated as needed or desired. For example, it may be desirable to update at least a portion of movement information and/or at least a portion of movement data to account for movement or lack thereof by the portable wireless device, or the passage of time.

In 510, at least a portion of movement data established in 508 is accessed. For example, the movement data that is accessed may be read from memory. In 512, a wireless network acquisition rate is established based, at least in part, on the movement data accessed in 510. For example, the wireless network acquisition rate may be based, at least in part, on a functional relationship to velocity data, position uncertainty data, or the like. By way of example, the functional relationship may be based at least in part on a linear function, a non-linear function, a discrete function, or combination thereof. The wireless network acquisition rate may, for example, be based, at least in part, on a functional relationship to one or more thresholds associated with the movement of the portable wireless device. By way of example, a functional relationship to a first threshold may be associated with the portable wireless device being stationary or moving "too slow" as defined by a first threshold and as such the wireless network acquisition rate may, for example, be set to a first rate. By way of further example, a functional relationship to a second threshold may be associated with the portable wireless device moving "too fast" as defined by a second threshold and as such the wireless network acquisition rate may, for example, be set to a second rate.

The wireless network acquisition rate may, for example, include a periodicity that specifies how often to initiate wireless signal acquisition attempts, a formula or schedule that can be used to determine when to initiate one or more wireless signal acquisition attempts. The wireless network acquisition rate may, for example, include a periodicity rate associated with the start time, end time, and/or duration of one or more attempts. The wireless network acquisition rate may, for example, include a periodicity rate associated with the start time, end time, and/or duration of one or more wait times between subsequent attempts.

In 514, at least one attempt to acquire a wireless network signal is initiated based, at least in part, on the wireless network acquisition rate established in 512. For example, a wireless network transceiver may be selectively operated in accordance with a wireless network scheme or protocol based, at least in part, on the wireless network acquisition rate.

Per section 504, all or part of the actions in 510, 512 and/or 514 may be repeated as needed or desired. For example, it may be desirable to update the wireless network acquisition rate based, at least in part, on the most recent movement data to further account for movement or lack thereof by the portable wireless device, or the passage of time.

## Claims

1. A method for use by a portable wireless device (102), the method comprising:
accessing movement data relating to the movement of the portable wireless device (510); determining a wireless network signal acquisition rate based on the movement data (512); initiating a first attempt to obtain sufficient information from a wireless network signal to enable processing of the received wireless signal to obtain data transmitted therein (514); initiating a second attempt to obtain sufficient information from a wireless network signal to enable processing of the received wireless signal to obtain data transmitted therein (514), the second attempt being initiated a duration after the initiation of the first attempt, the duration being based upon the determined wireless signal acquisition rate,
**characterized in that** the method further comprises initiating further attempts to obtain sufficient information from a wireless network signal to enable processing of the received wireless network signal to obtain data transmitted therein, each further attempt being initiated a duration after the initiation of the previous attempt, the duration being based upon the determined wireless signal acquisition rate, and including preventing further attempts once sufficient information has been obtained to enable processing of the received wireless network signal.

2. The method as recited in Claim 1, further comprising:
establishing said movement data based, at least in part, on movement information associated with at least one movement sensor (212).

3. The method as recited in Claim 2, wherein said at least one movement sensor comprises at least one sensor selected from a group of sensors comprising an accelerometer (224a), a gyroscope (224b), a geomagnetic sensor (224c), and an altimeter (224d).

4. The method as recited in Claim 1, further comprising:
establishing said movement data based, at least in part, on movement information associated with a satellite positioning system.

5. The method as recited in Claim 1, wherein said movement data comprises at least one type of movement data associated with said portable wireless device selected from a group of data comprising velocity data (226b), and position uncertainty data (226c).

6. The method as recited in Claim 1, wherein establishing said wireless network signal acquisition rate further comprises:
determining an increase in a movement of said portable wireless device based, at least in part, on said movement data; and
increasing said wireless network signal acquisition rate based, at least in part, on said increase in said movement.

7. The method as recited in Claim 1, wherein establishing said wireless network signal acquisition rate further comprises:
determining a decrease in a movement of said portable wireless device based, at least in part, on said movement data; and
decreasing said wireless network signal acquisition rate based, at least in part, on said decrease in said movement.

8. The method as recited in Claim 1, wherein establishing said wireless network signal acquisition rate further comprises:
in response to a determination that a movement of said portable wireless device based, at least in part, on said movement data is below a first threshold, establishing said wireless network signal acquisition rate at a first rate.

9. The method as recited in Claim 1, wherein establishing said wireless network signal acquisition rate further comprises:
in response to a determination that a movement of said portable wireless device based, at least in part, on said movement data is above a second threshold, establishing said wireless network signal acquisition rate at a second rate.

10. A computer program product, comprising:
computer-readable medium comprising instructions for causing at least one processing unit to perform the method according to any one of claims 1 to 9.

11. An apparatus for use with a portable wireless device (200), the apparatus comprising:
means (224a, 224b, 224c, 224d) for accessing movement data (218) relating to the movement of the portable wireless device; means (202) for determining a wireless network signal acquisition rate based on said movement data; means (202) for initiating a first attempt to obtain sufficient information from a wireless network signal to enable processing of the received wireless signal to obtain data transmitted therein; means (202) for initiating a second attempt to obtain sufficient information from a wireless network signal to enable processing of the received wireless signal to obtain data transmitted therein, wherein the second attempt is initiated a duration after the initiation of the first attempt, the duration being based upon the determined wireless network signal acquisition rate,
**characterized in that** the apparatus further comprises means for initiating further attempts to obtain sufficient information from a wireless network signal to enable processing of the received wireless network signal to obtain data transmitted therein, each further attempt being initiated a duration after the initiation of the previous attempt, the duration being based upon the determined wireless signal acquisition rate, and including preventing further attempts once sufficient information has been obtained to enable processing of the received wireless network signal.

12. The apparatus as recited in Claim 11, wherein the means for accessing movement data comprises a movement sensor, (212) the movement sensor preferably comprising at least one sensor selected from a group of sensors comprising an accelerometer (224a), a gyroscope (224b), a geomagnetic sensor (224c), and an altimeter (224d).

13. The apparatus as recited in Claim 12, including a satellite positioning system receiver configurable to output the movement date.

14. The apparatus as recited in Claim 11, wherein said movement data comprises at least one type of movement data associated with said portable wireless device selected from a group of data comprising velocity data (226b), and position uncertainty data (226c).

## Patentansprüche

1. Verfahren zur Anwendung durch ein portables drahtloses Gerät (102), wobei das Verfahren Folgendes beinhaltet:
Zugreifen auf Bewegungsdaten in Bezug auf die Bewegung des portablen drahtlosen Geräts (510);
Feststellen einer drahtlosen Netzwerksignalerfassungsrate auf der Basis der Bewegungsdaten (512);
Einleiten eines ersten Versuchs zum Einholen von genügend Informationen von einem drahtlosen Netzwerksignal, um das Verarbeiten des empfangenen drahtlosen Signals zum Einholen von darin gesendeten Daten (514) zu ermöglichen;
Einleiten eines zweiten Versuchs zum Einholen von genügend Informationen von einem drahtlosen Netzwerksignal, um das Verarbeiten des empfangenen drahtlosen Signals zum Einholen von darin gesendeten Daten (514) zu ermöglichen,
wobei der zweite Versuch nach einer Dauer nach der Einleitung des ersten Versuchs eingeleitet wird, wobei die Dauer auf der fesgestellten drahtlosen Signalerfassungsrate basiert,
**dadurch gekennzeichnet, dass** das Verfahren ferner das Einleiten weiterer Versuche zum Einholen von genügend Informationen von einem drahtlosen Netzwerksignal beinhaltet, um das Verarbeiten des empfangenen drahtlosen Netzwerksignals zum Einholen von darin gesendeten Daten zu ermöglichen, wobei jeder weitere Versuch nach einer Dauer nach der Einleitung des vorherigen Versuchs eingeleitet wird, wobei die Dauer auf der bestimmten drahtlosen Signalerfassungsrate basiert, und das Verhindern weiterer Versuche beinhaltet, wenn genügend Informationen eingeholt wurden, um das Verarbeiten des empfangenen drahtlosen Netzwerksignals zu ermöglichen.

2. Verfahren nach Anspruch 1, das ferner Folgendes beinhaltet:
Bestimmen der genannten Bewegungsdaten wenigstens teilweise auf der Basis von mit wenigstens einem Bewegungssensor (212) assoziierten Bewegungsinformationen.

3. Verfahren nach Anspruch 2, wobei der genannte wenigstens eine Bewegungssensor wenigstens einen Sensor umfasst, ausgewählt aus einer Gruppe von Sensoren, die einen Beschleunigungsmesser (224a), ein Gyroskop (224b), einen geomagnetischen Sensor (224c) und einen Höhenmesser (224d) umfasst.

4. Verfahren nach Anspruch 1, das ferner Folgendes beinhaltet:
Festlegen der genannten Bewegungsdaten wenigstens teilweise auf der Basis von mit einem Satellitennavigationssystem assoziierten Bewegungsinformationen.

5. Verfahren nach Anspruch 1, wobei die genannten Bewegungsdaten wenigstens einen Typ von Bewegungsdaten umfassen, assoziiert mit dem genannten portablen drahtlosen Gerät, ausgewählt aus einer Gruppe von Daten, die Geschwindigkeitsdaten (226b) und Positionsunsicherheitsdaten (226c) umfassen.

6. Verfahren nach Anspruch 1, wobei das Bestimmen der genannten drahtlosen Netzwerksignalerfassungsrate ferner Folgendes beinhaltet:
Feststellen einer Zunahme einer Bewegung des genannten portablen drahtlosen Geräts wenigstens teilweise auf der Basis der genannten Bewegungsdaten; und
Erhöhen der genannten drahtlosen Netzwerksignalerfassungsrate wenigstens teilweise auf der Basis der genannten Erhöhung der genannten Bewegung.

7. Verfahren nach Anspruch 1, wobei das Bestimmen der genannten drahtlosen Netzwerksignalerfassungsrate ferner Folgendes beinhaltet:
Feststellen einer Abnahme einer Bewegung des genannten portablen drahtlosen Geräts wenigstens teilweise auf der Basis der genannten Bewegungsdaten; und
Verringern der genannten drahtlosen Netzwerksignalerfassungsrate wenigstens teilweise auf der Basis der genannten Abnahme der genannten Bewegung.

8. Verfahren nach Anspruch 1, wobei das Bestimmen der genannten drahtlosen Netzwerksignalerfassungsrate ferner Folgendes beinhaltet:
Bestimmen, als Reaktion auf eine Feststellung, dass eine Bewegung des genannten portablen drahtlosen Geräts wenigstens teilweise auf der Basis der genannten Bewegungsdaten unter einer ersten Schwelle liegt, der genannten drahtlosen Netzwerksignalerfassungsrate mit einer ersten Rate.

9. Verfahren nach Anspruch 1, wobei das Bestimmen der genannten drahtlosen Netzwerksignalerfassungsrate ferner Folgendes beinhaltet:
Bestimmen, als Reaktion auf eine Feststellung, dass eine Bewegung des genannten portablen drahtlosen Geräts wenigstens teilweise auf der Basis der genannten Bewegungsdaten über einer ersten Schwelle liegt, der genannten drahtlosen Netzwerksignalerfassungsrate mit einer zweiten Rate.

10. Computerprogrammprodukt, das Folgendes umfasst:
ein computerlesbares Medium, das Befehle umfasst, um zu bewirken, dass wenigstens eine Verarbeitungseinheit das Verfahren nach einem der Ansprüche 1 bis 9 durchführt.

11. Vorrichtung zur Verwendung mit einem portablen drahtlosen Gerät (200), wobei die Vorrichtung Folgendes umfasst:
Mittel (224a, 224b, 224c, 224d) zum Zugreifen auf Bewegungsdaten (218) in Bezug auf die Bewegung des portablen drahtlosen Geräts;
Mittel (202) zum Feststellen einer drahtlosen Netzwerksignalerfassungsrate auf der Basis der genannten Bewegungsrate;
Mittel (202) zum Einleiten eines ersten Versuchs zum Einholen von genügend Informationen von einem drahtlosen Netzwerksignal, um das Verarbeiten des empfangenen drahtlosen Signals zum Einholen von darin gesendeten Daten zu ermöglichen;
Mittel (202) zum Einleiten eines zweiten Versuchs zum Einholen von genügend Informationen von einem drahtlosen Netzwerksignal, um das Verarbeiten des empfangenen drahtlosen Signals zum Einholen von darin gesendeten Daten zu ermöglichen, wobei der zweite Versuch nach einer Dauer nach dem Einleiten des ersten Versuchs eingeleitet wird, wobei die Dauer auf der festgestellten drahtlosen Netzwerksignalerfassungsrate basiert,
**dadurch gekennzeichnet, dass** die Vorrichtung ferner Mittel zum Einleiten weiterer Versuche zum Einholen von genügend Informationen von einem drahtlosen Netzwerksignal umfasst, um das Verarbeiten des empfangenen drahtlosen Netzwerksignals zum Einholen von darin gesendeten Daten zu ermöglichen, wobei jeder weitere Versuch nach einer Dauer nach dem Einleiten des vorherigen Versuchs eingeleitet wird, wobei die Dauer auf der festgestellten drahtlosen Signalerfassungsrate basiert und das Verhindern weiterer Versuche beinhaltet, wenn genügend Informationen eingeholt wurden, um das Verarbeiten des empfangenen drahtlosen Netzwerksignals zu ermöglichen.

12. Vorrichtung nach Anspruch 11, wobei das Mittel zum Zugreifen auf Bewegungsdaten einen Bewegungssensor (212) umfasst, wobei der Bewegungssensor ferner vorzugsweise wenigstens einen Sensor umfasst, ausgewählt aus einer Gruppe von Sensoren, die einen Beschleunigungsmesser (224a), ein Gyroskop (224b), einen geomagnetischen Sensor (224c) und einen Höhenmesser (224d) umfasst.

13. Vorrichtung nach Anspruch 12 mit einem Satellitennavigationssystemempfänger, der zum Ausgeben der Bewegungsdaten konfigurierbar ist.

14. Vorrichtung nach Anspruch 11, wobei die genannten Bewegungsdaten wenigstens einen Typ von Bewegungsdaten umfassen, die mit dem genannten portablen drahtlosen Gerät assoziiert sind, ausgewählt aus einer Gruppe von Daten, die Geschwindigkeitsdaten (226b) und Positionsunsicherheitsdaten (226c) umfassen.

## Revendications

1. Procédé d'utilisation d'un dispositif sans fil portable (102), le procédé comprenant :
accéder à des données de mouvement se rapportant au mouvement du dispositif sans fil portable (510) ;
déterminer une fréquence d'acquisition de signaux de réseau sans fil sur la base des données de mouvement (512) ;
amorcer une première tentative pour obtenir des informations suffisantes d'un signal de réseau sans fil pour permettre de traiter le signal sans fil reçu afin d'obtenir des données transmises dedans (514) ;
amorcer une deuxième tentative pour obtenir des informations suffisantes d'un signal de réseau sans fil pour permettre de traiter le signal sans fil reçu afin d'obtenir des données transmises dedans (514) ;
la deuxième tentative étant amorcée une durée après l'amorçage de la première tentative, la durée étant basée sur la fréquence d'acquisition de signaux de réseau sans fil déterminée,
**caractérisé en ce que** le procédé comprend en outre amorcer d'autres tentatives pour obtenir des informations suffisantes d'un signal de réseau sans fil pour permettre de traiter le signal de réseau sans fil reçu afin d'obtenir des données transmises dedans, chaque autre tentative étant amorcée une durée après l'amorçage de la tentative précédente, la durée étant basée sur la fréquence d'acquisition de signaux de réseau sans fil déterminée,
et comprenant le fait d'empêcher d'autres tentatives une fois que des informations suffisantes ont été obtenues pour permettre de traiter le signal de réseau sans fil reçu.

2. Procédé selon la revendication 1, comprenant en outre :
établir lesdites données de mouvement sur la base, en partie au moins, d'informations de mouvement associées à au moins un capteur de mouvement (212).

3. Procédé selon la revendication 2, dans lequel au moins un capteur de mouvement comprend au moins un capteur sélectionné parmi un groupe de capteurs consistant en un accéléromètre (224a), un gyroscope (224b), un capteur géomagnétique (224c) et un altimètre (224d).

4. Procédé selon la revendication 1, comprenant en outre :
établir lesdites données de mouvement sur la base, en partie au moins, d'informations de mouvement associées à un système de positionnement par satellites.

5. Procédé selon la revendication 1, dans lequel lesdites données de mouvement comprennent au moins un type de données de mouvement associées audit dispositif sans fil portable sélectionné parmi un groupe de données comprenant des données de vitesse (226b) et des données d'incertitude de position (226c).

6. Procédé selon la revendication 1, dans lequel établir ladite fréquence d'acquisition de signal de réseau sans fil comprend en outre :
déterminer un accroissement dans un mouvement dudit dispositif sans fil portable sur la base, en partie au moins, desdites données de mouvement ; et
accroître ladite fréquence d'acquisition de signal de réseau sans fil sur la base, en partie au moins, dudit accroissement dans ledit mouvement.

7. Procédé selon la revendication 1, dans lequel établir ladite fréquence d'acquisition de signal de réseau sans fil comprend en outre :
déterminer un décroissement dans un mouvement dudit dispositif sans fil portable sur la base, en partie au moins, desdites données de mouvement ; et
décroître ladite fréquence d'acquisition de signal de réseau sans fil sur la base, en partie au moins, dudit décroissement dans ledit mouvement.

8. Procédé selon la revendication 1, dans lequel établir ladite fréquence d'acquisition de signal de réseau sans fil comprend en outre :
en réponse à une détermination qu'un mouvement dudit dispositif sans fil portable sur la base, en partie au moins, desdites données de mouvement est au-dessous d'un premier seuil, établir ladite fréquence d'acquisition de signal de réseau sans fil à une première fréquence.

9. Procédé selon la revendication 1, dans lequel établir ladite fréquence d'acquisition de signal de réseau sans fil comprend en outre :
en réponse à une détermination qu'un mouvement dudit dispositif sans fil portable sur la base, en partie au moins, desdites données de mouvement est au-dessus d'un deuxième seuil, établir ladite fréquence d'acquisition de signal de réseau sans fil à une deuxième fréquence.

10. Produit de programme informatique, comprenant :
un support lisible par ordinateur comprenant des instructions pour faire qu'au moins une unité de traitement mette en oeuvre le procédé selon l'une quelconque des revendications 1 à 9.

11. Appareil à utiliser avec un dispositif sans fil portable (200), l'appareil comprenant :
un moyen (224a, 224b, 224c, 224d) pour accéder à des données de mouvement (218) se rapportant au mouvement du dispositif sans fil portable ;
un moyen (202) pour déterminer une fréquence d'acquisition de signaux de réseau sans fil sur la base des données de mouvement ;
un moyen (202) pour amorcer une première tentative pour obtenir des informations suffisantes d'un signal de réseau sans fil pour permettre de traiter le signal sans fil reçu afin d'obtenir des données transmises dedans ;
un moyen (202) pour amorcer une deuxième tentative pour obtenir des informations suffisantes d'un signal de réseau sans fil pour permettre de traiter le signal sans fil reçu afin d'obtenir des données transmises dedans ;
dans lequel la deuxième tentative est amorcée une durée après l'amorçage de la première tentative, la durée étant basée sur la fréquence d'acquisition de signaux de réseau sans fil déterminée,
**caractérisé en ce que** l'appareil comprend en outre un moyen pour amorcer d'autres tentatives pour obtenir des informations suffisantes d'un signal de réseau sans fil pour permettre de traiter le signal de réseau sans fil reçu afin d'obtenir des données transmises dedans, chaque autre tentative étant amorcée une durée après l'amorçage de la tentative précédente, la durée étant basée sur la fréquence d'acquisition de signaux de réseau sans fil déterminée,
et comprenant le fait d'empêcher d'autres tentatives une fois que des informations suffisantes ont été obtenues pour permettre de traiter le signal de réseau sans fil reçu.

12. Appareil selon la revendication 11, dans lequel le moyen pour accéder aux données de mouvement comprend un capteur de mouvement (212), le capteur de mouvement comprenant de préférence au moins un capteur sélectionné parmi un groupe de capteurs comprenant un accéléromètre (224a), un gyroscope (224b), un capteur géomagnétique (224c) et un altimètre (224d).

13. Appareil selon la revendication 12, comprenant un récepteur de système de positionnement par satellites configurable pour sortir les données de mouvement.

14. Appareil selon la revendication 11, dans lequel lesdites données de mouvement comprennent au moins un type de données de mouvement associées audit dispositif sans fil portable sélectionné parmi un groupe de données comprenant des données de vitesse (226b) et des données d'incertitude de position (226c).
